Europäisches Patentamt

European Patent Office

Office européen des brevets

(19)

(11) Veröffentlichungsnummer: **0 015 304**
**B1**

(12) # EUROPÄISCHE PATENTSCHRIFT

(45) Veröffentlichungstag der Patentschrift: **18.05.83**

(21) Anmeldenummer: **79103711.2**

(22) Anmeldetag: **29.09.79**

(51) Int. Cl.³: **G 03 B 15/05, H 05 B 41/32**

(54) **Verfahren und Vorrichtung zum Aufladen eines Kondensators.**

(30) Priorität: **02.02.79 CH 1031/79**

(43) Veröffentlichungstag der Anmeldung:
**17.09.80 Patentblatt 80/19**

(45) Bekanntmachung des Hinweises auf die Patenterteilung:
**18.05.83 Patentblatt 83/20**

(84) Benannte Vertragsstaaten:
**AT BE DE FR GB IT LU NL SE**

(56) Entgegenhaltungen:
**DE - A - 2 063 836**
**DE - C - 904 730**
**US - A - 4 075 536**

(73) Patentinhaber: **ZELLWEGER USTER AG**
**Wilstrasse 11**
**CH-8610 Uster (CH)**

(72) Erfinder: **Goede, Simon, Dipl.-Ing.**
**Höhenstrasse 27**
**CH-8620 Wetzikon (GB)**
Erfinder: **Fischer, Kurt**
**Eglisackerweg 1**
**CH-8610 Uster (CH)**

(74) Vertreter: **Dipl.-Phys.Dr. Manitz Dipl.-Ing.**
**Finsterwald Dipl.-Ing. Grämkow Dipl.-Chem.Dr.**
**Heyn Dipl.-Phys.Rotermund Morgan B.Sc.(Phys.)**
**Robert-Koch-Strasse 1**
**D-8000 München 22 (DE)**

Courier Press, Leamington Spa, England.

### Verfahren und Vorrichtung zum Aufladen eines Kondensators

Die Erfindung betrifft ein Verfahren und eine Vorrichtung zum Aufladen mindestens eines über eine Blitzröhre entladbaren Kondensators in Abhängigkeit von der momentanen Kondensatorspannung.

Es sind Blitzgeräte für die Fotografie bekannt, bei welchen ein aus der Netzspannung über einen Transformator und Gleichrichter aufgeladener Kondensator zu einem bestimmten Zeitpunkt durch Zündung einer Blitzlampe entladen wird. Solche Blitzgeräte ergeben zwar für den vorgesehenen Zweck ausreichende Helligkeit, doch weisen sie verschiedene Nachteile dann auf, wenn es sich darum handelt in sehr rascher Folge, beispielsweise in einem Rhythmus von weniger als einer Sekunde intensive Lichtblitze zu erzeugen.

Ein bei Inbetriebnahme des Blitzgerätes oder nach erfolgter Auslösung eines Lichtblitzes entladener Kondensator kann aus praktischen Gründen zur Aufladung nicht unmittelbar an eine niederohmige Gleichspannungsquelle angeschlossen werden, weil dann ein für die betreffenden Schaltelemente unzulässig hoher Einschaltstromstoß entstehen würde. Der ungeladene Kondensator stellt nämlich im Anschaltmoment für die Gleichspannungsquelle praktisch einen Kurzschluß dar. Diese stoßweise Belastung würde sich auch auf der Primärseite des Transformators bemerkbar machen und zu einer Überlastung im Primärkreis des Transformators führen. In den meisten Fällen ergäbe sich dabei auch eine unzulässig hohe stoßweise Belastung des betreffenden Netzanschlusses.

Um diese Auswirkungen zu vermeiden, wird zwischen Gleichstromquelle und aufzuladenden Kondensator ein Ladewiderstand eingeschaltet, der den Ladestromstoß auf eine zulässige Größe begrenzt. Die Größe des Ladewiderstandes wird dabei so dimensioniert, daß der Anfangswert des exponentiel abnehmenden Ladestromes in einem gegebenen Fall einen bestimmten Maximalwert gerade erreicht. Da nun aber der Ladestrom unmittelbar nach dem Anfang des Ladevorganges sehr schnell kleiner wird, wird die maximale Leistung der Gleichspannungsquelle und die Energieübertragungskapazität des Ladekreises sehr schlecht ausgenützt, wodurch auch die Aufladezeit beträchtlich verlängert und die Erzielung einer raschen Blitzfolge verhindert wird.

Dieser Problematik könnte dadurch Rechnung getragen werden, daß einerseits der Anfangsstrom beim Ladevorgang gesenkt und andererseits der Endstromwert bei Erreichung der gewünschten Ladespannung angehoben wird. Dies könnte durch Aufladung des Kondensators über eine Drosselspule hoher Induktivität und kleinem ohmschen Widerstandes erzielt werden, was während des Aufladevorgangs nur zu geringen ohmschen Verlusten führen würde. Gegen eine solche Lösung sprechen jedoch mehrere Gründe, insbesondere der hohe Materialaufwand für eine solche Drosselspule bei den für ein Hochleistungsblitzgerät in Frage kommenden Energiemengen. Es wäre aber auch ein großer Aufwand erforderlich zur genauen Regelung der in der Drosselspule zwischengespeicherten und dem Kondensator zuzuführenden Energiemengen.

Eine Regelung des Ladestromes während des Ladevorganges könnte ebenfalls durch eine elektronische Steuerung des Ladevorganges erreicht werden. Bei resistiver Regelung des Ladestromes mittels Halbleiter oder Widerständen muß im allgemeinen ein Wirkungsgrad von nur 50% in Kauf genommen werden. Bei einem Hochleistungsblitzgerät für Netzanschluß z.B. 220 V/Wechselspannung/10 Ampere steht netzseitig eine Quellenleistung von etwa 2 kW zur Verfügung.

Bei einem Wirkungsgrad von 50% kann daher im günstigsten Falle eine Energie von 500 Ws innerhalb von 0,5 Sekunden auf den Kondensator übertragen werden. Dieser günstigste Fall würde erreicht beim Einsatz einer Konstantstromquelle und dies ergäbe einen Blitzrhythmus von 0,5 Sekunden.

Konstantstromquellen elektronischer Bauart sind an sich bekannt. Die zir Realisierung einer solchen Konstantstromquelle für den hier vorgesehenen Verwendungszweck erforderlichen Halbleiterbauelemente müssen jedoch wegen dem bei resistiver Regelung höchstens erreichbaren Wirkungsgrad von 50% eine ebenso große Energiemenge wie sie auf den Kondensator übertragen wird, selbst aufnehmen und als Wärme innerhalb der Aufladezeit abgeben können, damit eine rasche Folge von Blitzen möglich ist. Die Verwendung solcher Halbleiter führt jedoch zu einer außerordentlich teueren Schaltung, die im Regelfall aus kommerziellen Gründen keine Verwendung finden kann.

Aus der US—A—4 075 536 ist eine Schaltung für den Betrieb von Blitzlichtlampen bekannt, deren Aufgabe es ist, möglichst viele Kondensatorladungen und damit Blitzlichtauslösungen bezogen auf die in einer Batterie zur Verfügung stehende Energie zu gewährleisten. Dazu wird versucht, die optimale Ladekurve linear anzunähern, wozu der Ladestrom stufenweise verändert und auf einen annähernd konstanten Wert reguliert wird. Damit kann der Energierverlust in der Batterie möglichst gering gehalten und eine verlustarme Ladung erreicht werden. Eine schnelle Kondensatorladung wie sie benötigt wird, wenn mehrere fotografische Aufnahmen kurz hintereinander ausgeführt werden müssen, läßt sich damit nicht erzielen.

Aus der DE—C—904 730 ist eine Vorrichtung zum Laden eines Kondensators in Verbindung mit einer Entladungsröhre, insbesondere für fotografische Zwecke, bekannt, bei der ein regelbarer Widerstand in Serie zur Stromquelle geschaltet ist. Zweck der vorgesehenen Ladeschaltung ist es, eine wirtschaftliche Ausnutzung der zur Verfügung stehenden Stromquelle, die im Regelfall aus einer Trockenbatterie besteht, zu gewährleisten. Außerdem soll es ermöglicht werden, verschiedene Lichtstärken bei der Auslösung der Blitzlichtlampe zu erhalten, um insbesondere bei Farbaufnahmen die von der Lichtstärke abhängige unterschiedliche spektrale Zusammensetzung der Entladung ausnutzen zu können. Mittels eines manuel zu betätigenden Schalters kann über die vorhandene Widerstandsanordnung entweder eine Langsamaufladung oder eine Schnellaufladung sowie außerdem eine Teilaufladung des Kondensators vorgenommen werden.

Aufgabe der Erfindung ist es, die Erzeugung intensiver Lichtblitze in sehr rascher Folge zu gewährleisten, so daß beispielsweise im Zusammenhang mit Verkehrsüberwachungsgeräten Fahrzeuge, die eine Kreuzung bei Rot überfahren, jeweils zweimal in sehr kurzen zeitlichen Abständen fotografiert und damit beweiskräftig erfaßt werden können.

Gelöst wird diese Aufgabe nach der Erfindung dadurch, daß zur Erreichung einer kurzen Aufladezeit unter Vermeidung eines hohen Ladestromstoßes der Ladestrom zunächst auf einen zulässigen Höchstwert begrenzt wird und daß im Verlauf der Aufladezeit jeweils nach einem vorgebbaren Abfall des Ladestroms und dem damit verbundenen Anstieg der Kondensatorspannung die Zeitkonstante des Ladekreises in der Weise verkleinert wird, daß der Ladestrom wiederholt seinen Höchstwert erreicht.

Vorzugsweise wird dabei die Zeitkonstante des Ladekreises während des Aufladevorganges stufenweise verändert. Diese Veränderung der Zeitkonstante wird nach einer Ausführungsform der Erfindung durch Veränderung des ohmschen Widerstands im Ladekreis während des Aufladezeit gewährleistet.

Die Steuerung des Widestandes erfolgt insbesondere stufenweise in Abhängigkeit von der Erreichung bestimmter Spannungswerte an den Klemmen des Kondensators.

Un eine unerwünschte Dauerzündung der Blitztlampe mit Sicherheit zu verhindern, wird nach erfolgter Entladung des Kondensators seine erneute Aufladung bevorzugt erst nach einer kurzen Zeitspanne eingeleitet. Der zeitliche Beginn einer erneuten Aufladung kann dabei nach einer in Abhängigkeit von der Temperatur der Blitzröhre gesteuerten Pause erfolgen.

Eine vorteilhafte Vorrichtung zur Durchführung des Ladeverfahrens nach der Erfindung zeichnet sich dadurch aus, daß in der Ladeschaltung eine in Abhängigkeit von der Klemmenspannung des Kondensators gesteuerte Widerstandsanordnung vorgesehen ist, die zur Erreichung einer kurzen Aufladezeit unter Vermeidung eines hohen Ladestromstoßes den Ladestrom zunächst auf einen zulässigen Höchstwert begrenzt und im Verlauf der Aufladezeit jeweils nach einem vorgebbaren Abfall des Ladestroms und dem damit verbundenen Anstieg der Kondensatorspannung die Zeitkonstante des Ladekreises in der Weise verkleinert, daß der Ladestrom wiederholt seinen Höchstwert erreicht.

Die Widerstandsanordnung ist dabei vorzugsweise stufenweise veränderbar, und es werden insbesondere in der Ladeschaltung des Kondensators angeordnete Widerstände einer Widerstandsanordnung durch in Abhängigkeit von der Klemmenspannung des Kondensators steuerbare elektronische Schaltorgane während des Ladevorganges sukzessive zueinander parallelgeschaltet.

Zur verzögerten Wiedereinschaltung der Ladeschaltung des wiederaufzuladenden Kondensators ist ein Verzögerungsglied vorgesehen, das aus einem bei der Blitzröhre angeordneten temperaturabhängigen Schaltelement bestehen kann und in einem Steuerstromkreis der Steuereinrichtung liegt. Auf diese Weise läßt sich eine temperaturabhängige Pause zwischen aufeinanderfolgenden Aufladungen des Kondensators erreichen.

Im folgenden wird die Erfindung anhand der Zeichnung beispielsweise erläutert. Dabei zeigt:

Fig. 1 ein Blockschaltbild eines ersten Ausführungsbeispiels;

Fig. 2 einen Stromverlauf;

Fig. 3 einen weiteren Stromverlauf;

Fig. 4 ein Schaltbild eines zweiten Ausführungsbeispiels;

Fig. 5 ein Schaltbild eines Ausführungsbeispiels eines ersten Steuerteils;

Fig. 6 ein Schaltbild eines Ausführungsbeispiels eines zweiten Steuerteils.

In allen Figuren sind für sich entsprechende Teile gleiche Hinweiszeichen verwendet.

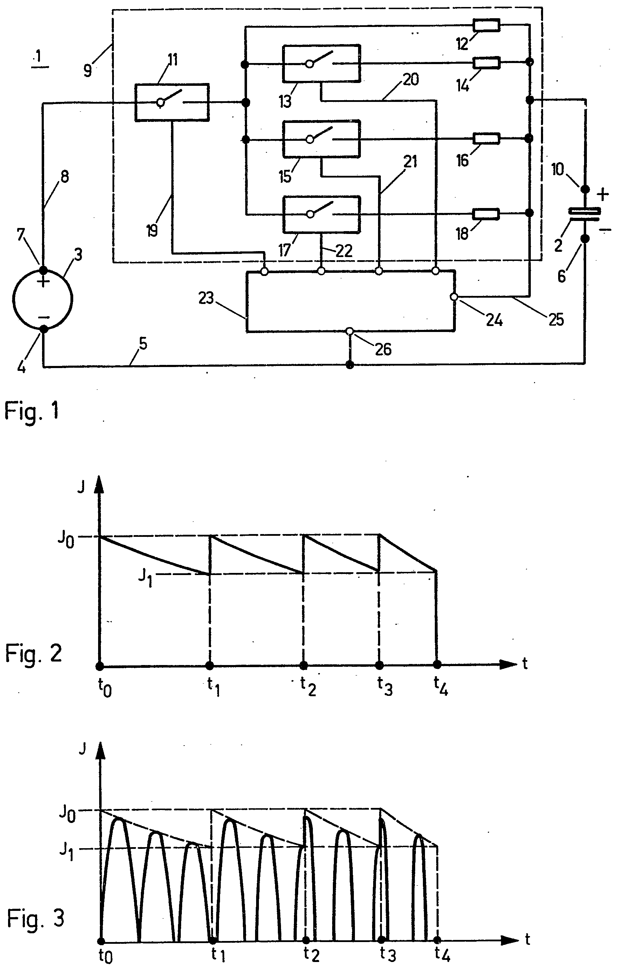

Die Fig. 1 zeigt ein Blockschaltbild eines ersten Ausführungsbeispiels einer Vorrichtung 1 zur Aufladung eines Kondensators 2. Eine Gleichstromquelle 3 ist einerseits mit ihrem negativen Pol 4 über eine Leitung 5 mit dem negativen Pol 6 des Kondensators 2 verbunden. Andererseits führt vom positiven Pol 7 der Gleichstromquelle 3 eine Leitung 8 über eine steuerbare Widerstandsanordnung 9 zum positiven Pol 10 des Kondensators 2.

Die steuerbare Widerstandsanordnung 9 weist einen ersten steuerbaren Schalter 11 und einen ersten Ladewiderstand 12, einen zweiten steuerbaren Schalter 13 und einen zweiten Ladewiderstand 14, einen dritten steuerbaren Schalter 15 und einen dritten Ladewiderstand 16 sowie einen vierten steuerbaren Schalter 17 und einen vierten Ladewiderstand 18 auf.

Zu jedem der steuerbaren Schalter 11, beziehungsweise 13, beziehungsweise 15, beziehungsweise 17 führt je eine Steuerleitung 19, beziehungsweise 20, beziehungsweise 21, beziehungsweise 22, welche ihnen entsprechende Steuerausgänge einer allen steuerbaren Schaltern (11, 13, 15, 17) zugeordneten Steuereinrichtung 23 mit diesen steuerbaren Schaltern verbindet. Ein Steuereingang 24 der Steuereinrichtung 23 ist über eine Leitung 25 mit dem positiven Pol 10 des aufzuladenden Kondensators 2 verbunden, während der Nullpotential-Anschluss 26 der Steuereinrichtung 3 über die Leitung 5 mit dem negativen Pol 6 des aufzuladenden Kondensators 2 verbunden ist.

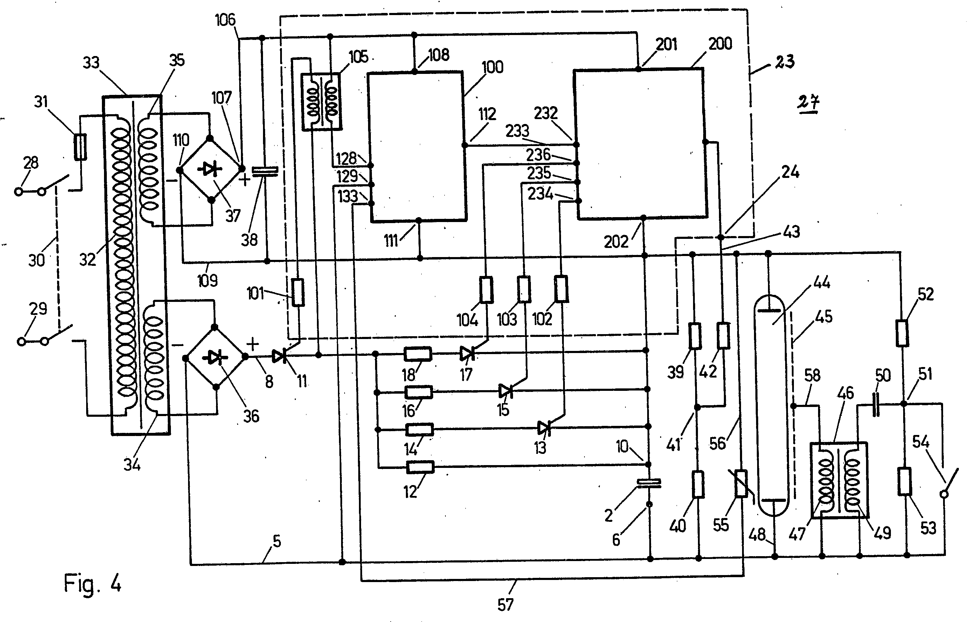

Ein Ausführungsbeispiel für eine Steuereinrichtung wird später anhand der Fig. 4, 5 und 6 näher erläutert.

Aufgabe der Steuereinrichtung 23 ist es, in Abhängigkeit der Ladespannung des Kondensators 2 die einzelnen steuerbaren Schalter 11, 13, 15, 17 sukzessive zu schliessen. Zufolge der gewählten Schaltanordnung und des sukzessiven Schliessens der genannten steuerbaren Schalter erfolgt ein sukzessives Parallelschalten des zweiten, dritten und vierten Ladewiderstandes 14, beziehungsweise 16, beziehungsweise 18 zum ersten Ladewiderstand 12. Dadurch wird der Gesamtwiderstand der Widerstandsanordnung 19 stufenweise vermindert und dadurch wird die Zeitkonstante, gebildet aus dem Produkt dieses Gesamtwiderstandes und der Kapazität des Kondensators 2 stufenweise verkleinert.

Durch diese Massnahme kann anstelle eines von einem Maximalwert exponentiell abfallenden Ladestromes ein Ladestromverlauf während der Aufladung etwa gemäss Fig. 2 erreicht werden. Der Ladestrom ist somit während des ganzen Ladevorganges wenigstens annähernd konstant, so dass nicht nur eine gute Ausnützung der Gleichstromquelle für eine wirksame Aufladung des Kondensators 2 erreicht wird, sondern es wird auch ein zu grosser Einschaltstromstoss beziehungsweise eine zu lange Aufladezeit, wie sie bei nur einem Widerstandswert auftreten würde, vermieden.

Zum Zeitpunkt $t_0$ zu welchem der steuerbare Schalter 11 durch ein Steuersignal auf der Leitung 19 geschlossen wird, ist der Kondensator 2 noch ungeladen und es fliesst daher, durch den ersten Ladewiderstand 12 begrenzt, ein maximaler Ladestrom $J_0$. Im ersten Ladeintervall vom Zeitpunkt $t_0$ bis zum Zeitpunkt $t_1$ nimmt der Ladestrom exponentiell ab, bis zu einem Wert $J_1$, zu welchem Zeitpunkt der Kondensator 2 auf eine Ladespannung $U_1$ aufgeladen worden ist.

Die Steuereinrichtung 23 ist nun so ausgebildet, dass sie bei Erreichung dieser Ladespannung $U_1$ über die Steuerleitung 20 den zweiten steuerbaren Schalter 13 schliesst und dadurch den zweiten Ladewiderstand 14 zum ersten Ladewiderstand 12 parallel schaltet. Durch diese Parallelschaltung der Ladewiderstände 12 und 14 — der erste steuerbare Schalter 11 bleibt geschlossen — wird der wirksame Widerstand der Widerstandsanordnung 9 soweit vermindert, dass im Zeitpunkt $t_1$ wieder ein Ladestrom von der Grösse $J_0$ fliesst.

Durch die Parallelschaltung des zweiten Ladewiderstandes 14 zum ersten Ladewiderstand 12 ist die durch den Seriewiderstand der Widerstandsanordnung 9 und die Kapazität des Kondensators gebildete Zeitkonstante T = R.C um eine Stufe vermindert worden. Hierdurch wird das zweite Ladeintervall, nämlich die Zeitspanne vom Zeitpunkt $t_1$ bis zu einem Zeitpunkt $t_2$, zu welchem der Ladestrom wieder auf den Wert $J_1$ abgesunken ist, gegenüber dem ersten Ladeintervall von $t_0$ bis $t_1$ verkürzt. Zum Zeitpunkt $t_2$ hat nun die Ladespannung des Kondensators 2 einen Wert $U_2$ erreicht.

Die Steuereinrichtung 23 ist nun so ausgebildet, dass sie bei Erreichung der Ladespannung $U_2$ über die weitere Steuerleitung 21 zusätzlich den steuerbaren Schalter 15 schliesst. Hierdurch wird der dritte Ladewiderstand 16 zu den bereits zueinander parallel geschalteten ersten und zweiten Ladewiderständen 12 und 14 parallel geschaltet, so dass sich nun die Zeitkonstante T des Ladekreises ein weiteres Mal vermindert. Das dritte Ladeintervall vom Zeitpunkt $t_2$ bis zu einem Zeitpunkt $t_3$, zu welchem der Ladestrom wieder auf den Wert $J_1$ abgesunken ist, ist zufolge der wieder verkleinerten Zeitkonstante wieder kürzer als das das davorliegende Ladeintervall von $t_1$ bis $t_2$. Es wird zum Zeitpunkt $t_3$ eine Ladespannung $U_3$ des Kondensators 2 erreicht und die Steuereinrichtung 23 ist so ausgebildet, dass sie bei dieser Ladespannung $U_3$ über die weitere Steuerleitung 22 nunmehr auch noch den vierten steuerbaren Schalter 17 schliesst. Dadurch wird zu den bereits zueinander parallel geschalteten ersten, zweiten und dritten Ladewiderständen 12, 14 und 16 noch der vierte Ladewiderstand 18 parallel geschaltet. Diese weitere Parallelschaltung bringt den bis zum Zeitpunkt $t_3$ wieder auf den Wert $J_1$ abgesunkenen Ladestrom wieder auf den Wert $J_0$ zurück und es schliesst sich an den Zeitpunkt $t_3$ ein letztes Ladeintervall von $t_3$ bis $t_4$ an.

Zum Zeitpunkt $t_4$ ist die volle Aufladung des Kondensators 2 auf die vorgesehene Ladespannung $U_4$ erreicht. Die Steuereinrichtung 23 ist nun so ausgebildet, dass nach Erreichung der Ladespannung $U_4$ der erste steuerbare Schalter 11 durch ein über die Steuerleitung 19 zugeführtes Signal wieder geöffnet wird. Die volle Ladung des Kondensators 2 steht nun für eine allfällige Auslösung eines Lichtblitzes durch Zündung einer an den Kondensator 2 angeschlossenen Blitzlampe zur Verfügung.

Vorzugsweise wird die Steuereinrichtung 23 so ausgebildet, dass — nach einer Entladung des Kondensators 2 über die Blitzlampe — seine erneute Aufladung durch verzögertes Schliessen des Schaltorgans 11 erst zeitlich verzögert erfolgt, d.h. nachdem die Blitzlampe entionisiert ist. Dies verhindert eine unerwünschte Dauerzündung der Blitzlampe.

Während der Stromverlauf gemäss Fig. 2 dem Fall entspricht, in welchem die Widerstandsanordnung 9 en eine im wesentlichen konstante Gleichspannungsquelle angeschlossen ist, zeigt die Fig. 3 einen möglichen Stromverlauf im Ladestromkreis bei einer Quelle, welche eine pulsierende Gleichspannung, beispielsweise aus einem Vollweggleichrichter, liefert. Die Enveloppe des Ladestromes verläuft auch hier annähernd auf konstantem Wert.

Die Fig. 4 zeigt ein Schaltbild eines zweiten Ausführungsbeispiels.

Mittels zweier Netzanschlussklemmen 28 und 29 kann das Blitzgerät 27 an einen Netzanschluss, beispielsweise 220 V, 50 Hz angeschlossen werden. Ueber einen zweipoligen Netzschalter 30 und eine Sicherung 31 ist die Primärwicklung 32 eines Netztransformators 33 an den Netzanschluss anschaltbar.

Der Netztransformator 33 hat eine Sekundärwicklung 34 und eine Tertiärwicklung 35. An die Sekundärwicklung 34 ist ein erster Vollweggleichrichter 36 und an die Tertiärwicklung 35 ist ein zweiter Vollweggleichrichter 37 angeschlossen. Der Vollweggleichrichter 36 dient der Speisung des Ladestromkreises des Kondensators 2, während der Vollweggleichrichter 37 noch mit einem Glättungskondensator 38 ausgerüstet ist und der Speisung der Steuereinrichtung 23 dient. Ladestromkreis und Steuereinrichtung des Blitzgerätes 27 entsprechen in ihrem Aufbau der Fig. 1, weshalb für die sich entsprechenden Schaltelemente in Fig. 4 und in Fig. 1 die gleichen Hinweiszeichen verwendet sind.

Es stellt ein Thyristor den ersten steuerbaren Schalter 11 dar, mit dem der erste Ladewiderstand 12 in Serie geschaltet ist. Mit einem zweiten Thyristor als zweitem steuerbaren Schalter 13 ist der zweite Ladewiderstand 14, mit einem dritten Thyristor als drittem steuerbaren Schalter 15 ist der dritte Ladewiderstand 16 und mit einem vierten Thyristor als viertem steuerbaren Schalter 17 ist der vierte Ladewiderstand 18 jeweils in Serie geschaltet. Durch Zündung der Thyristoren 13, 15 und 17 können jeweils die Ladewiderstände 14, 16 und 18 zum ersten Ladewiderstand 12 parallel geschaltet werden.

Das Blitzgerät 27 hat wie das anhand der Fig. 1 beschriebene erste Ausführungsbeispiel die Steuereinrichtung 23, welche einen ersten Steuerteil 100 und einen zweiten Steuerteil 200 aufweist. Dem ersten Thyristor 11 ist ein erster Gate-Widerstand 101, dem zweiten Thyristor 13 ein zweiter Gate-Widerstand 102, dem dritten Thyristor 15 ein dritter Gate-Widerstand 103 und dem vierten Thyristor 17 ein vierter Gate-Widerstand 104 zugeordnet. Ausserdem ist zwischen dem ersten Steuerteil 100 und dem ersten steuerbaren Schaltorgan 11 ein Zündtransformator 105 angeordnet.

Parallel zum Kondensator 2, an welchem sich während des Ladevorganges die Ladespannung aufbaut, liegt ein Spannungsteiler bestehend aus den Widerständen 39 und 40. Der Spannungsteilerpunkt 41 ist über einen weiteren Widerstand 42 und eine Leitung 43 mit dem Eingang 24 der Steuereinrichtung 23 verbunden.

Ebenfalls parallelgeschaltet zum Kondensator 2 ist eine Blitzlampe 44 mit einer Zündelektrode 45. Der Blitzlampe 44 ist ein Zündtransformator 46 zugeordnet, dessen Sekundärwicklung 47 einerseits mit der Kathode 48 der Blitzlampe 44 und über die Leitung 5 mit dem negativen Anschluss des Gleichrichters 36 verbunden ist und welche anderseits über eine Leitung 58 an die Zündelektrode 45 der Blitzlampe angeschlossen ist. Die Primärwicklung 49 des Zündtransformators 46 ist einerseits über die Leitung 5 mit dem negativen Anschluss des Gleichrichters 36 verbunden und anderseits über einen Kondensators 50 an den Spannungsteilerpunkt 51 eines aus den Widerständen 52 und 53 bestehenden Spannungsteilers angeschlossen. Dieser Spannungsteiler aus den Widerständen 52 und 53 liegt parallel zur Blitzlampe 44 und zum Kondensator 2. Mittels eines Schalters 54, welcher zwischen dem Spannungsteilerpunkt 51 und der Leitung 5 liegt kann der Kondensators 50 entladen werden. Durch den während des Entladevorganges des Kondensators 50 entstehenden Stromstoss in der Primärwicklung 49 des Zündtransformators 46 wird an der Sekundärwicklung 47 eine hohe Spannung erzeugt, welche an die Zündelektrode 45 geführt, die Blitzlampe 44 zündet. Infolge der Zündung der Blitzlampe 44 wird der zuvor aufgeladene Kondensator 2 schlagartig über die Blitzlampe entladen.

In der Nähe der Blitzlampe 44 ist zum Zwecke der Temperaturmessung ein Widerstand 55 mit negativem Temperaturkoeffizient angeordnet. Er liegt in einem Stromkreis von der Anode der Blitzlampe 44 über eine Leitung 56 und eine Leitung 57 zum Steuerteil 100 der Steuereinrichtung 23. Der Widerstand 55 dient indirekt der Temperaturmessung und wie später noch gezeigt wird dem Schutz der Blitzlampe vor Ueberlastung.

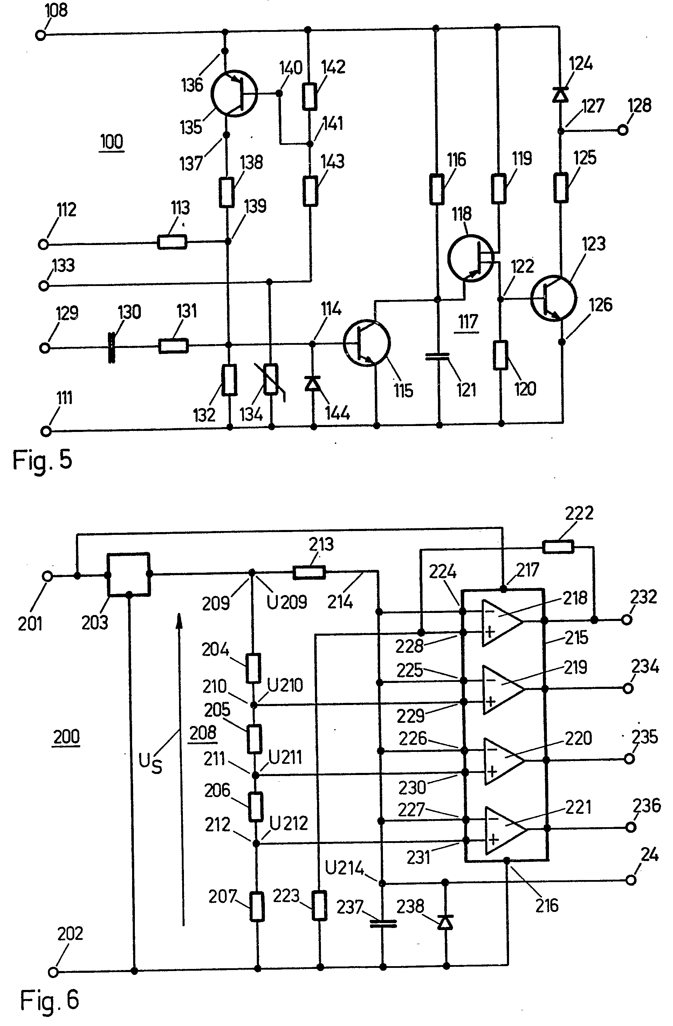

Die Fig. 5 zeigt ein Schaltbild eines Ausführungsbeispiels eines Steuerteils 100 der Steuereinrichtung 23. Dieser Steuerteil 100 hat die Aufgabe, den ersten steuerbaren Schalter 11 einzuschalten, im vorliegenden Ausführungsbeispiel den ersten Thyristor zu zünden, um den Ladevorgang des Kondensators 2 einzuleiten. Zu diesem Zwecke wird dem Steuerteil 100 vom weiteren Steuerteil 200, wie später anhand der Fig. 6 noch erläutert wird, bei entladenem Kondensator 2 an seinen Eingang 112 das logische Signal "0" zugeführt. Dieses logische "0"-Signal gelangt über einen Widerstand 113 zur Basis 114 eines Transistors 115. Das bedeutet, dass diesem Transistor 115 kein Basisstrom zugeführt wird, et ist daher nicht stromleitend und stellt keinen Kurzschluss dar für den ihm nachgeschalteten Kondensator 121. Ein Oszillator 117, gebildet aus dem Widerstand 116, dem Uni-Junction-Transistor 118, den Widerständen 119 und 120 und dem Kondensator 121, kann demzufolge frei schwingen.

Der Oszillator 117 liefert an die Basis 122 eines Transistors 123 Stromimpulse. Der Kollektorstrom wird dem Transistor 123 vom positiven Speisepunkt 108 über den Zündtransformator 105 (Fig. 4), den Ausgang 128 und einen Strombegrenzungswiderstand 125 zugeführt. Der Emitter 126 der Transistor 123 ist mit dem negativen Speisepunkt 111 verbunden. Die im Transistor 123 verstärkten Stromimpulse werden vom Schaltungspunkt 127 an einen Ausgang 128 des Steuerteils 100 (siehe auch Fig. 4) und dadurch über die Primärwicklung des Zündtransformators 105 zum positiven Speisepunkt 108 geführt. Die in der Sekundärwicklung des Zündtransformators 105 erzeugten Zündimpulse zünden über den Gate-widerstand 101 den ersten Thyristor 11 und ermöglichen dadurch den Ladevorgang des Kondensators 2.

Wird die Frequenz des Oszillators 117 wesentlich höher als die Netzfrequenz gewählt, so erübrigt sich eine Synchronisation der Zündimpulse mit det Netzfrequenz, weil dann nämlich der Thyristor 11 innerhalb jeder Halbperiode der Netzfrequenz ohnehin sehr frühzeitig gezündet wird. Die Diode 124 im Steuerteil 100 schützt in bekannter Weise den Thyristor vor zu hohen induktiven Spannungsspitzen aus dem nachgeschalteten Zündtransformators 105.

Der Steuerteil 100 dient aber auch dazu, nach einer durch Zündung der Blitzlampe 44 erfolgten Entladung des Kondensators 2, eine kurze Verzögerung eines neuen Ladevorganges zu bewirken. Hierdruch wird das sogenannte Durchzünden der Blitzlampe aufgrund noch bestehender Ionisation vermieden. Ein solches Durchzünden wäre nämlich für die Blitzlampe sehr schädlich.

Diese kurzzeitige Unterbrechung des Ladevorganges kommt wie folgt zustande.

Durch den Entladevorgang des Kondensators 2 steigt das Potential an der Kathode 48 der Blitzlamp 44 rasch gegen das Potential ihrer Anode, d.h. gegen das Potential des positiven Pols 10 des Kondensators 2 und damit des Potentials der mit ihm verbundenen Leitung 109, welche auch mit dem negativen Speisepunkt 111 des Steuerteils 100 verbunden ist.

Ein Eingang 129 des Steuerteils 100 ist mit der zur Kathode 48 der Blitzlampe 44 führenden Leitung 5 verbunden (siehe Fig. 4), wodurch auch das Potential am Eingang 129 nach Zündung der Blitzlampe 44 sprunghaft ansteigt. Anschliessend wird der Kondensator 130 (siehe Fig. 5) der vor der Zündung der Blitzlampe auf die volle Ladespannung des Kondensators 2 aufgeladen war, über die Widerstände 131 und 132 entladen.

Während dieses Entladevorganges erhält der Transistor 115 Basisstrom, wird dadurch leitend gehalten und schliesst den Kondensator 121 des Oszillators 117 kurz. Der Oszillator 117 schwingt daher nicht mehr und liefert über den Transistor 123 auch keine Impulse mehr an den Zündtransformator 105. In der Folge wird der erste Thyristor 11 nicht gezündet, so dass der Ladevorgang des Kondensators 2 vorerst nicht einsetzen kann.

Es steht dadurch der Blitzlampe 44 genügend Zeit zur Verfügung zum Abbau der Ionisation, wodurch ein Durchzünden der Blitzlampe verunmöglicht wird.

Werden von einem Blitzgerät sehr viele und rasch aufeinanderfolgende Blitze verlangt, so besteht schliesslich die Gefahr einer Ueberhitzung der Blitzlampe, wodurch deren Lebensdauer extrem verkürzt würde. Um dies zu verhindern ist der Widerstand 55, welcher einen negativen Temperaturkoeffizienten aufweist, benachbart zur Blitzlampe 44 angeordnet (siehe Fig. 4). Der über diesen Widerstand 55 und von ihm temperaturabhängig beeinflusste Strom gelangt über die Leitung 57 (siehe Fig. 4) zu einem weiteren Eingang 133 (siehe Fig. 4 und Fig. 5) des Steuerteils 100. Zwischen dem weiteren Eingang 133 und den negativen Speisepunkt 111 ist ein Varistor 134 geschaltet, um einen Transistor 135 vor möglichen Spannungsstössen, die während des Blitzvorganges in den Widerstand 55 induziert werden könnten, zu schützen.

Der Transistor 135 liegt mit seinem Emitter 136 am positiven Speisepunkt 108, während sein Kollektor 137 über einen Kollektorwiderstand 138 mit dem Verbindungspunkt 139 der Widerstände 113 und 132 verbunden ist. Die Basis 140 des Transistors 135 ist an den Spannungsteilerpunkt 141 eines zwischen dem positiven Speisepunkt 108 und dem Eingang 133 liegenden Spannungsteilers aus den Widerständen 142 und 143 angeschlossen.

Erwärmt sich die Blitzlampe 44 zufolge unzu-lässig hoher Zahl aufeinanderfolgend ausge-löster Blitze zu stark, so steigt zufolge des ne-gativen Temperaturkoeffizienten des Wider-standes 55 (siehe Fig. 4) der durch ihn zum Eingang 133 fliessende Strom. Hierdurch steigt auch der Strom durch den Transistor 135 an und dem Transistor 115 wird Basisstrom zugeführt. Dadurch wird der Transistor 115 leitend und in bereits beschriebener Weise wird hierdurch der Oszillator 117 gestoppt. Es werden deshalb keine Zündimpulse mehr für den ersten Thyristor 11 (siehe Fig. 4) gebildet, d.h. der Ladevorgang des Kondensators 2 wird bis zur ausreichenden Abkühlung der Blitzlampe 44 und des Widerstandes 55 unterbrochen. Dadurch können bei zu stark erhitzter Blitzlampe keine weiteren Entladungen des Kondensators 2 erfolgen.

Ueber die Basis 114 des Transistors 115 wird, wie erwähnt, die Erzeugung von Zündimpulsen für den ersten steuerbaren Schalter 11 gesteuert. Damit während des Auflade vor-ganges des Kondensators 2 das Basispotential

des Transistors 115 nicht zu tief unterhalb das Emitterpotential desselben absinken kann, was zu unzulässig hohen Strömen in seiner Basisregion führen könnte, liegt zwischen der Basis 114 und dem negativen Speisepunkt 111 eine Diode 144.

Die Fig. 6 zeigt ein Schaltbild eines Ausführungsbeispiels eines Steuerteils 200 der Steuereinrichtung 23. Dieser Steuerteil 200 hat die Aufgabe, die Steuersignale zu bilden, welche für die sukzessive Einschaltung der steuerbaren Schalter 11, 13, 15 und 17 benötigt werden. Diese Steuersignale werden in Abhängigkeit der Ladespannung am aufzuladenden Kondensator 2 gebildet, wobei ebenso viele Spannungsvergleichsstufen vorgesehen sind, wie steuerbare Schalter (11, 13, 15, 17) beziehungsweise Ladewiderstände (12, 14, 16, 18) vorgesehen sind.

Der Steuerteil 200 ist einerseits mit seinem positiven Speisepunkt 201 an die Leitung 106 (siehe Fig. 4) angeschlossen, welche zum positiven Pol 107 des Gleichrichters 37 führt und andererseits ist sein negativer Speisepunkt 202 mit der Leitung 109 (siehe Fig. 4) verbunden, welche zum negativen Pol 110 Gleichrichters 37 führt.

Ueber einen Spannungsregler 203, beispielsweise Motorola Typ 7815, wird einem aus den Widerständen 204, 205, 206 und 207 bestehenden Spannungsteiler 208 eine stabilisierte Speisespannung $U_s$ von beispielsweise 15 V zugeführt. Am Schaltungspunkt 209 liegt daher ein Potential $U_{209}$, am Schaltungspunkt 210 liegt ein Potential $U_{210}$, am Schaltungspunkt 211 liegt ein Potential $U_{211}$ und am Schaltungspunkt 212 liegt ein Potential $U_{212}$.

Ueber einen Widerstand 213 und eine Leitung 214 ist der Schaltungspunkt 209 mit dem Steuereingang 24 verbunden, über welchen der Steuereinrichtung 23 (siehe Fig. 4) eine Steuerspannung zugeführt wird, welche von der Ladespannung des Kondensators 2 abhängig ist. Dadurch führt auch die Leitung 214 ein Potential, welches vom jeweiligen Ladezustand des Kondensators 2 abhängig ist.

Zu Beginn eines Ladevorganges des Kondensators 2 ist dessen Ladespannung noch Null, d.h. der negative Pol 6 des Kondensators 2 und die mit ihm verbundene Leitung 5 führen noch gleiches Potential wie der positive Pol 10. Da dieser positive Pol 10 aber über die Leitung 109 auch mit dem negativen Speisepunkt 202 des Steuerteils 200 verbunden ist, ergibt sich für die Leitung 214 ein positives Potential, dessen Betrag sich aus der Spannungsteilung vom Potential $U_{209}$ am Schaltungspunkt 209 über den Widerstand 213 zum Steuereingang 24, über den Widerstand 42 (Fig. 4) zum Potential des Schaltungspunktes 41 ergibt. Im vorliegenden Beispiel wurde angenommen, dass das Potential $U_{209}$ + 15 V beträgt. Da über dem Kondensator 2 zu Beginn des Ladevorganges noch keine Ladungsspannung auftritt, liegt daher zu Beginn des Ladevorganges das Potential auf der Leitung 214 um den über dem Widerstand 213 sich ergebenden Spannungsabfall tiefer als + 15 V. Während des Ladevorganges steigt die Ladespannung am Kondensator 2 wie früher erwähnt über die Werte $U_1$, $U_2$, $U_3$ schliesslich auf den Wert $U_4$ an. Proportional zu diesen Werten verändert sich auch das Potential am Schaltungspunkt 41 (Fig. 4) und zwar bezogen auf das als Null-Potential angenommene Potential des Speisepunktes 202 in negativer Richtung. Das Potential $U_{214}$ der Leitung 214 sinkt daher während des Ladevorganges aufgrund der gewählten Widerstandswerte gegen das Null-Potential ab. Dieses Potential $U_{214}$ steht in direkter Abhängigkeit von der momentanen Ladespannung am Kondensator 2.

Ein handelsüblicher Vierfachoperationsverstärker 215, beispielsweise in integrierter Bauweise, liegt mit seinem negativen Speisepunkt 216 am negativen Speisepunkt 202 des Steuerteils 200 und mit seinem positiven Speisepunkt 217 am positiven Speisepunkt 201 des Steuerteils 200. Der Vierfachoperationsverstärker 215 enthält die vier Operationsverstärker 218, 219, 220 und 221, deren jeweilige Eingänge mit 224, 228; 225, 229; 226, 230 und 227, 231 bezeichnet sind. Diese Operationsverstärker stellen Schwellwertstufen für den Vergleich des Potentials $U_{214}$ mit den durch den Spannungsteiler 208 gebildeten festen Potentialwerten $U_{210}$, $U_{211}$ und $U_{212}$, sowie mit dem auf den negativen Speisepunkt 202 bezogenen Potential dar.

In an sich bekannter Weise wird durch die Widerstände 222 und 223 der Uebertragungscharakteristik des Operationsverstärkers 218 eine definierte Hysterese verliehen.

Zur Zeit $t_0$ führt der Ausgang 232 der Operationsverstärkers 218 das Signal logische "0". Zur Zeit $t_1$ (Fig. 2, 3) erreicht die Ladespannung den Wert $U_1$ und dadurch erreicht das Potential $U_{214}$ die Schaltschwelle $U_{210}$ des Operationsverstärkers 219, so dass dessen Ausgang 234 auf den logischen Zustand "1" springt. Das logische Signal "1" wird vom Ausgang 234 des Steuerteils 200 (Fig. 4) über den zweiten Gate-Widerstand 102 dem zweiten Thyristor, welcher den zweiten steuerbaren Schalter 13 darstellt, zugeführt. Hierdurch wird der zweite Ladewiderstand 14 zum ersten Ladewiderstand 12 parallel geschaltet und der Ladestrom nimmt wider den Wert $J_0$ an. (Fig. 2, 3).

In der Folge steigt die Ladespannung weiter bis sie zum Zeitpunkt $t_2$ den Wert $U_2$ erreicht, wobei auch das Potential $U_{214}$ die Schaltschwelle $U_{211}$ des Operationsverstärkers 220 erreicht. Dadurch springt dessen Ausgang 235 auf den logischen Zustand "1". Das logische Signal "1" wird nun vom Ausgang 235 des Steuerteils 200 (Fig. 4) über den dritten Gate-Widerstand 103 dem dritten Thyristor, welcher den dritten steuerbaren Schalter 15 darstellt, zugeführt. Hierdurch wird der dritte Ladewiderstand 16 zu den bereits parallel geschalteten ersten und zweiten Ladewiderständen 12 und 14 ebenfalls parallel geschaltet und der Ladestrom nimmt erneut den Wert $J_0$ an. (Fig. 2, 3). In der Folge steigt die Ladespannung weiter bis zum Zeitpunkt $t_3$ der Wert $U_3$ erreicht wird, wobei auch das Potential $U_{214}$ die Schaltschwelle $U_{212}$ des Operationsverstärkers 221 erreicht. Dabei springt dessen Ausgang 236 auf den logischen Zustand "1". Das logische Signal "1" wird nun vom Ausgang 236 des Steuerteils 200 (Fig. 4) über den vierten Gate-Widerstand 104 dem vierten Thyristor, welcher den vierten steuerbaren Schalter 17 darstellt, zugeführt. Hierdurch wird der vierte Ladewiderstand 18 zu den bereits parallel geschalteten Ladewiderständen 12, 14 und 16 ebenfalls parallel geschaltet und der Ladestrom nimmt erneut den Wert $J_0$ an. (Fig. 2, 3).

Nach einer weiteren Zeitspanne erreicht schliesslich die Ladespannung des Kondensators 2 den Wert $U_4$, d.h. die beabsichtigte volle Ladespannung und gleichzeitig erreicht das Potential $U_{214}$ die Schaltschwelle des Operationsverstärkers 218. Hierdurch kippt der Ausgang 232 des Operationsverstärkers 218 auf den Zustand logisch "1". Das Signal logisch "1" wird vom Ausgang 232 über die Leitung 233 an den Eingang 112 des Steuerteils 100 geführt (Fig. 4) und veranlasst, wie früher beschrieben, die Blockierung von Zündimpulsen für den ersten Thyristor, welcher den ersten steuerbaren Schalter 11 darstellt. Dadurch wird der Aufladevorgang des Kondensators 2 beim nächsten Nulldurchgang des Stromes durch den ersten Thyristor (11) unterbrochen und der Kondensator 2 ist auf seine endgültige Ladespannung $U_4$ aufgeladen.

Zum Schutz der Operationsverstärker 218, 219, 220 und 221 gegen allfällige Ueberspannungen ist zwischen die Leitung 214 und dem negativen Speisepunkt 202 noch ein Kondensator 237 und eine Diode 238 geschaltet.

Wird bei aufgeladenem Kondensator 2 der Schalter 54 (Fig. 4) vorübergehend geschlossen, so wird der Kondensator 50 schlagartig entladen, der dann fliessende Stromstoss erzeugt in der Sekundärwicklung 47 des Zündtransformators 46 die Zündspannung für die Zündung der Blitzlampe 44. Durch das Zünden der Blitzlampe 44 wird der Kondensator 2 entladen und, wie früher beschrieben, erfolgt nach einer kurzen Pause für die Entionisierung der Blitzlampe automatische eine erneute Aufladung.

Wie früher beschrieben wird bei unzulässiger Erwärmung der Blitzlampe 44, hervorgerufen durch eine zu grosse Zahl rasch aufeinanderfolgender Zündungen, infolge des Temperaturanstieges der Blitzlampe 44 und des Widerstandes 55 eine dadurch gesteuerte vorübergehende Blockierung weiterer Aufladungen des Kondensators 2 erreicht.

**Patentansprüche**

1. Verfahren zum Aufladen mindestens eines über eine Blitzröhre entladbaren Kondensators in Abhängigkeit von der momentanen Kondensatorspannung, dadurch gekennzeichnet, daß zur Erreichung einer kurzen Aufladezeit unter Vermeidung eines hohen Ladestromstoßes der Ladestrom zunächst auf einen zulässigen Höchstwert begrenzt wird und daß im Verlauf der Aufladezeit jeweils nach einem vorgebbaren Abfall des Ladestroms und dem damit verbundenen Anstieg der Kondensatorspannung die Zeitkonstante des Ladekreises in der Weise verkleinert wird, daß der Ladestrom wiederholt seinen Höchstwert erreicht.

2. Verfahren nach Anspruch 1, dadurch gekennzeichnet, daß die Zeitkonstante des Ladekreises während des Aufladevorganges stufenweise verändert wird.

3. Verfahren nach Anspruch 1, dadurch gekennzeichnet, daß der Ohmsche Widerstand im Ladekreis während der Aufladezeit verändert wird.

4. Verfahren nach Anspruch 3, dadurch gekennzeichnet, daß die Steuerung des Widerstandes stufenweise in Abhängigkeit von der Erreichung bestimmter Spannungswerte an den Klemmen des Kondensators erfolgt.

5. Verfahren nach einem der Ansprüche 1 bis 4, dadurch gekennzeichnet, daß nach erfolgter Entladung des Kondensators eine erneute Aufladung erst nach einer kurzen Zeitspanne eingeleitet wird.

6. Verfahren nach Anspruch 5, dadurch gekennzeichnet, daß nach erfolgter Entladung des Kondensators seine erneute Aufladung erst nach einer in Abhängigkeit von der Temperatur der Blitzröhre gesteuerten Pause erfolgt.

7. Vorrichtung zum Aufladen eines über eine Blitzröhre entladbaren Kondensators mit einer in Abhängigkeit von der momentanen Kondensatorspannung gesteuerten Ladeschaltung, dadurch gekennzeichnet, daß in der Ladeschaltung eine in Abhängigkeit von der Klemmenspannung des Kondensators gesteuerte Widerstandsanordnung vorgesehen ist, die zur Erreichung einer kurzen Aufladezeit unter Vermeidung eines hohen Ladestromstoßes den Ladestrom zunächst auf einen zulässigen Höchstwert begrenzt und im Verlauf der Aufladezeit jeweils nach einem vorgebbaren Abfall des Ladestroms und dem damit verbundenen Anstieg der Kondensatorspannung die Zeitkonstante des Ladekreises in der Weise verkleinert, daß der Ladestrom wiederholt seinen Höchstwert erreicht.

8. Vorrichtung nach Anspruch 7, dadurch gekennzeichnet, daß die Widerstandsanordnung stufenweise veränderbar ist.

9. Vorrichtung nach Anspruch 8, dadurch gekennzeichnet, daß in der Ladeschaltung des Kondensators angeordnete Widerstände einer Widerstandsanordnung durch in Abhängigkeit von der Klemmenspannung des Kondensators steuerbare elektronische Schaltorgane während des Ladevorganges sukzessive zueinander parallel geschaltet werden.

10. Vorrichtung nach einem der Ansprüche 7 bis 9, dadurch gekennzeichnet, daß ein Verzögerungsglied (130, 131, 132) vorgesehen ist zur verzögerten Wiedereinschaltung der Ladeschaltung des wieder aufzuladenden Kondensators (2).

11. Vorrichtung nach Anspruch 10, dadurch gekennzeichnet, daß zur Erzielung einer temperaturabhängigen Pause zwischen aufeinanderfolgenden Aufladungen des Kondensators (2) ein temperaturabhängiges Schaltelement (55) bei der Blitzröhre angeordnet ist und dieses auch in einem Steuerstromkreises der Steuereinrichtung (23) liegt.

**Revendications**

1. Procédé pour charger au moins un condensateur pouvant être déchargé par l'intermédiare d'une lampe-éclair en fonction de la tension instantanée du condensateur, caractérisé en ce que pour parvenir à un temps de charge bref tout en évitant une impulsion de courant de charge élevée, le courant de charge est d'abord limité à une valeur maximum admissible et qu'au cours du temps de charge, après une chute prédéterminable du courant de charge et la croissance qui y est liée de la tension du condensateur, la constante de temps du circuit de charge est réduite de telle sorte que le courant de charge atteint à nouveau sa valeur maximum.

2. Procédé suivant la revendication 1, caractérisé en ce que la constante de temps du circuit de charge est modifiée graduellement pendant l'opération de charge.

3. Procédé suivant la revendication 1, caractérisé en ce que la résistance ohmique dans le circuit de charge est modifiée pendant le temps de charge.

4. Procédé suivant la revendication 3, caractérisé en ce que la commande de la résistance a lieu en fonction de l'atteinte de valeurs de tension déterminées aux bornes du condensateur.

5. Procédé suivant l'une quelconque des revendications 1 à 4, caractérisé en ce qu'après avoir effectué la décharge du condensateur, sa recharge n'est amorcée qu'après un bref intervalle de temps.

6. Procédé suivant la revendication 5, caractérisé en ce qu'après avoir effectué la décharge du condensateur, sa recharge n'a lieu qu'après une pause commandée en fonction de la température de la lampe-éclair.

7. Dispositif pour charger un condensateur pouvant être déchargé par l'intermédiaire d'une lampe-éclair, avec un montage de charge commandé en fonction de la tension instantanée aux bornes du condensateur, caractérisé en ce qu'on prévoit dans le montage de charge, un agencement de résistances commandé en fonction de la tension aux bornes du condensateur qui, pour parvenir à un temps de charge court tout en évitant une impulsion de courant de charge élevée, limite d'abord le courant de charge à une valeur maximum admissible et au cours du temps de charge, après une chute prédéterminable du courant de charge et la croissance qui y est liée de la tension de condensateur, réduit la constante de temps du circuit de charge de telle sorte que le courant de charge atteint à nouveau sa valeur maximum.

8. Dispositif suivant la revendication 7, caractérisé en ce que l'agencement de résistances est variable graduellement.

9. Dispositif suivant la revendication 8, caractérisé en ce que les résistances de charge situées dans le montage de charge du condensateur, d'un agencement de résistances, sont connectées successivement en parallèle entre elles au cours de l'opération de charge, par des organes de commutation électroniques pouvant être commandés en fonction de la tension aux bornes du condensateur.

10. Dispositif suivant l'une quelconque des revendications 7 à 9, caractérisé en ce qu'un organe de retard (130, 131, 132) est prévu pour une remise en circuit retardée du montage de charge du condensateur (2) à recharger.

11. Dispositif suivant la revendication 10, caractérisé en ce que pour obtenir une pause fonction de la température entre des charges successives du condensateur (2), un élément de commande (55) fonction de la température est agencé près du tube-éclair et est également situé dans un circuit de commande du dispositif de commande (23).

**Claims**

1. A method of charging at least one capacitor in dependence on the instantaneous capacitor voltage, said capacitor being dischargable via a flash tube, characterised in that, in order to achieve a short charging time while avoiding a high charging current surge, the charging current is first limited to a permissible maximum value, and in that the time constant of the charging circuit is reduced in the course of the charging period each time a predetermined reduction in the charging current and the associated increase of the capacitor voltage occurs, in such a way that the charging current repeatedly attains its maximum value.

2. A method in accordance with claim 1 and characterised in that the time constant of the charging circuit is changed stepwise during the charging process.

3. A method in accordance with claim 1 and characterised in that the ohmic resistance in the charging circuit is varied during the charging period.

4. A method in accordance with claim 3 and characterised in that the control of the resistance takes place stepwise in dependence on the attainment of specific voltage values at the terminals of the capacitor.

5. A method in accordance with one of the claims 1 to 4 and characterised in that, after completed discharge of the capacitor, it is first recharged after a short time interval.

6. A method in accordance with claim 5 and characterised in that after completed discharge of the capacitor it is first recharged after a pause controlled in dependence on the temperature of the flash tube.

7. Apparatus for charging a capacitor dischargable via a flash tube with a charging circuit controlled in dependence on the instantaneous capacitor voltage, characterised in that a resistor arrangement controlled in dependence on the terminal voltage of the capacitor is provided in the charging circuit and, in order to achieve a short charging period while avoiding a high charging current surge, in that the resistor arrangement first limits the charging current to a permissible maximum value, and then reduces the time constant of the charging circuit during the course of the charging period each time a predetermined reduction of the charging current and the associated rise of the capacitor voltage occurs, in such a way that the charging current repeatedly attains its maximum value.

8. Apparatus in accordance with claim 7 and characterised in that the resistor arrangement is varied stepwise.

9. Apparatus in accordance with claim 8 and characterised in that the resistors of a resistor arrangement which are arranged in the charging circuit of the capacitor are successively connected in parallel with one another by electronic switching devices controllable in dependence on the terminal voltage of the capacitor.

10. Apparatus in accordance with one of the claims 7 to 9 and characterised in that a delay circuit (130, 131, 132) is provided for delaying the renewed switching on of the charging circuit for the capacitor (2) which is to be recharged.

11. Apparatus in accordance with claim 10 and characterised in that a temperature dependent circuit element (55) is arranged adjacent the flash tube in order to achieve a temperature dependent pause between successive chargings of the capacitor (2), with the circuit element also lying in a current control circuit of the control device (23).

**0 015 304**

Fig. 1

Fig. 2

Fig. 3

Fig. 4

Fig. 5

Fig. 6